# EUROPEAN PATENT APPLICATION

(11) **EP 4 002 594 A1**
(43) Date of publication of application: **25.05.2022**
(21) Application number: 21208401.6
(22) Date of filing: 16.11.2021
(51) Int. Cl.: H01R 4/48, H01R 4/60, F16B 39/24, F16F 1/02, F16F 1/32, H01R 13/6596

(54) **CONTACT RING FOR HIGHLY DYNAMIC APPLICATIONS**

(30) Priority: 19.11.2020 DE 102020130634
(71) Applicant: TE Connectivity Germany GmbH, 64625 Bensheim (DE)
(72) Inventor: BURGHARD, Michael, 64625 BENSHEIM (DE); FERTIG, Jochen, 64625 BENSHEIM (DE); MASAK, Stefan, 64625 BENSHEIM (DE); POLLOK, Hubert, 64293 DARMSTADT (DE); SCHEER, Kevin, 64625 BENSHEIM (DE); IVANOV, Ivan, 64625 BENSHEIM (DE)
(74) Representative: Grünecker Patent- und Rechtsanwälte PartG mbB

(57) **Abstract**

The present invention relates to a compression spring contact in the form of a contact ring (10, 100) for connecting at least a first and a second electrically conductive contact element (1, 2), the contact ring (10, 100) comprising: a a circular ring made of an electrically conductive material, the structure having a plurality of projections (104, 1004) or blades (18, 108) on at least one side. The projections (104, 1004) and the blades (18, 108) are suitable for contacting the electrically conductive materials of the contact elements (1, 2) and to form an electrically conductive connection therebetween, the projections (104, 1004) and the blades (18, 108) being suitable for penetrating an electrically insulating surface layers of the contact elements.

## Description

The present invention relates to a contact ring which connects contact elements in an electrically conductive manner.

Contact rings are known in the form of compression spring contacts which are made of electrically conductive materials and can therefore establish electrically conductive connections between contact elements. These contact rings are typically flat and have, for example, a wave shape so that they alternately touch the surfaces of the contact elements.

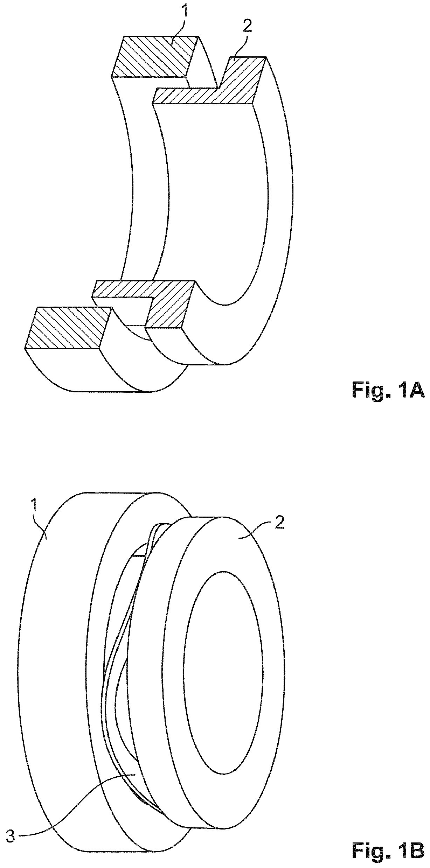

Figures 1A to 1B illustrate a conventional arrangement of two contact elements without a connecting member (Figure 1A) and two contact elements with a connecting member (Figure 1B). The connecting member in Figure 1B is a typical contact ring as is known from prior art. The contact ring is flat and wave-shaped and is typically made of spring steel which has good mechanical but poor electrothermal properties, which can also hardly be compensated for by a thick silver plating. The contact sections of the known contact ring are also not able to reliably penetrate electrically insulating surface layers, such as aluminum oxide, with typical contact forces. They are also prone to corrosion.

Contact elements, though containing electrically conductive materials whose surfaces, however, are made of electrically insulating layers, such as natural oxides, cannot be connected in an adequate electrically conductive manner by the contact ring shown in figure 1B.

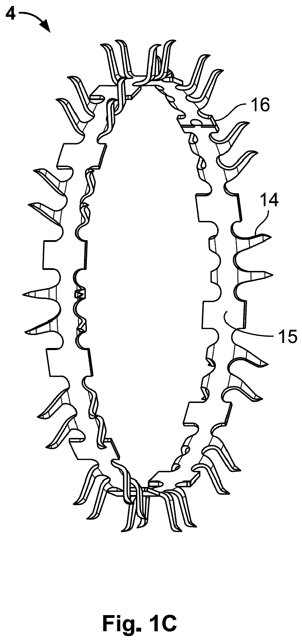

This problem is solved by the contact ring shown in Figure 1C. Such a contact ring is formed by closing a strip of an electrically conductive material, for example a silver-plated copper alloy, to form a closed, ring-shaped structure. The strip comprises projections on at least one longitudinal side. The projections have tips or sharp edges that penetrate the electrically insulating surface layers of the contact elements and thereby establish an electrically conductive connection between the electrically conductive cores of the contact elements.

However, due to the predominantly elastic mounting of the contact ring according to Figure 1C between the contact elements, the vibration resistance of this contact ring is limited. This is because the entire load of the vibrations is transmitted via the projections. It is therefore very difficult to shape and dimension the projections or other flexible structures in such a way that they can withstand the permanently high dynamic loads. A contact piece is therefore required that combines good electrothermal properties with increased vibration resistance.

This problem is solved by the subject matter of the independent claims. Advantageous embodiments of the present invention are presented in the dependent claims.

For connecting contact elements having an electrically conductive core and an electrically insulating surface layer, the present invention is based on the idea of using a contact member which is made of electrically conductive material and respectively penetrates the electrically insulating surface layers of the contact elements wherein a predominantly yielding bearing of the contact piece is avoided.

The contact member according to the present invention has the shape of a ring or a ring-shaped disk, wherein the terms "ring" and "ring-shaped disk" in the present application refer to circular ring structures as well as structures that are topologically equivalent to circular ring structures. In order to ensure better understanding, only the term "ring" shall be used in the following without further specification. The figures show circular ring structures by way of example, although structures that are topologically equivalent to circular ring structures are also included.

The ring shape of the contact member enables, in particular, the efficient connection of cylindrical contact elements with a corresponding base area, since the latter has the appropriate architecture for use in a limited ring-shaped installation space. It is created in that from a disk made of an electrically conductive material, for example, a silver-plated copper alloy, a concentrical, smaller disk and an element in radial direction is removed, such that a flat ring with a slot is formed. The use of a silver-plated copper alloy is advantageous since it represents a good compromise between mechanical and electrothermal properties.

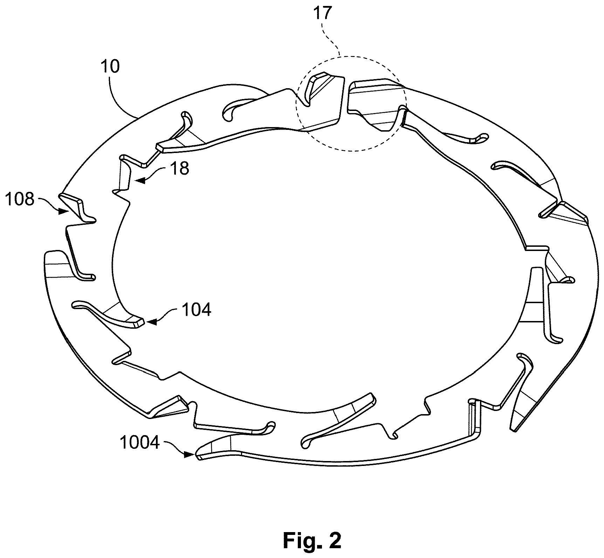

The contact ring comprises projections on at least one of the inward and outward facing sides. The projections are bent out of the ring plane and have tips or sharp edges which penetrate the electrically insulating surface layers of the contact elements and thereby establish an electrically conductive connection between the electrically conductive cores of the contact elements. The projections may be oriented radially (as in Figure 1C) or tangentially (as in Figure 2).

In addition, the contact ring includes blades that are bent out of the plane of the ring, have tips or sharp edges, and thus penetrate the opposing surfaces of the contact elements. The blades are evenly spaced between the projections. As a result, the blades enable a tight press fit of the contact ring and contact elements in the final arrangement state. While the protrusions are mainly stressed for bending, the blades are mainly stressed for buckling. Therefore, the protrusions are deformed in a controlled manner and the blades are deformed slightly. A ring-shaped disk equipped only with the projections would be elastic in the longitudinal direction. The ring-shaped disk according to the present invention, on the other hand, is stiffened in the longitudinal direction by the blades. The projections are therefore relieved of vibration by the blades, so that the contact ring has a higher overall vibration resistance.

By using a large number of short projections, the contact ring according to the present invention benefits from the advantages of multi-contact physics and has favorable electrothermal properties. The projections each establish an electrically conductive contact, whereby a plurality of electrically conductive connections between the contact elements is created, which leads to many short current flows and redundant contacting. The additional blades further increase this effect.

In contrast to known contact rings, which have planar contact sections for touching the contact elements, the contact sections of the contact ring according to the present invention are very limited and thereby reduce the occurrence of corrosion.

According to an advantageous embodiment, the projections and the blades are arranged alternatingly on the inner and outer side of the contact ring.

According to a further advantageous embodiment, the projections and the blades are arranged exclusively on the inner side or exclusively on the outer side of the contact ring.

The contact ring can be used as part of a contact system comprising two contact elements, where the contact ring is integrated into the first contact element. In this case, the contacting takes place only on one side, between the second contact element and the contact ring integrated in the first contact element.

The contact rings according to all embodiments have a high degree of adaptability with regard to the orientation, arrangement, number, and configurations of the projections and blades.

For better understanding of the present invention, it shall be explained in detail by way of the embodiments illustrated in the figures below. Same elements are there designated with same reference numerals and same component designations. Furthermore, some features or combinations of features from the different embodiments shown and described can also be independent inventive solutions by themselves or solutions according to the invention.
- Fig. 1A: shows a first and a second contact element.
- Fig. 1B: shows the two contact elements from Figure 1A connected by a contact ring in a known embodiment.
- Fig. 1C: shows a contact ring with projections.
- Fig. 2: shows the contact ring according to the first embodiment of the present invention.
- Fig. 3A: shows the contact ring according to the first embodiment of the present invention together with contact element 1.
- Fig. 3B: shows the contact ring according to the first embodiment of the present invention together with contact element 2.
- Fig. 4: shows the contact ring according to the first embodiment of the present invention together with contact element 2, wherein the journal of the contact element 2 has a groove in which the contact ring is arranged.
- Fig. 5A: shows the contact ring according to the second embodiment of the present invention.
- Fig. 5B: shows the contact ring according to the second embodiment of the present invention together with contact element 1.
- Fig. 5C: shows the contact ring according to the second embodiment of the present invention together with contact element 2.

Embodiments of the present invention shall be described hereafter in detail with reference to Figures 2 to 5C.

Figures 2 to 4 show a contact ring 10 according to a first embodiment of the invention. As shown in Figure 2, the contact ring 10 comprises a flat ring-shaped structure made of electrically conductive material having a slot 17. The contact ring 10 has projections 104, 1004 on the inwardly facing side 104 and outwardly facing side 1004. The projections 104, 1004 are bent out of the ring plane, taper and have tips or sharp edges which penetrate the electrically insulating surface layers of the contact elements 1 and 2 and thereby establish an electrically conductive connection between the electrically conductive cores of the contact elements 1 and 2. Depending on the constellation of the opposing surfaces of the contact elements 1 and 2, the projections 104, 1004 may be oriented radially (as in Figure 1C) or tangentially (as in Figure 2). A tangential orientation of the projections 104, 1004 allows for a more efficient assembly and is therefore preferred.

In addition, the contact ring 10 comprises blades 18 and 108 on the inward and outward facing sides, respectively, which are bent out of the plane of the ring, have tips or sharp edges, and thus penetrate into the opposing surfaces of the contact elements 1 and 2. The blades 18 and 108 are preferably, but not necessarily uniformly disposed between the projections 104 and 1004. As a result, the blades 18, 108 enable a tight press fit of the contact ring 10 and the contact elements 1 and 2 in the final arrangement state. Compared to the protrusions 104 and 1004, the blades 18 and 108 are arranged at a greater angle relative to the ring plane and are therefore less deformed. The blades 18 and 108 stiffen the contact ring 10 in the longitudinal direction, so that the projections 104 and 1004 are relieved of vibration and the contact ring 10 has a higher overall resistance to vibration. In addition, the blades 18 and 108 reduce contact resistance by providing more contact areas with higher contact normal forces.

The material of contact ring 10 preferably comprises a silver-plated copper alloy. In contrast to spring steel, this material has good mechanical as well as good electrothermal properties.

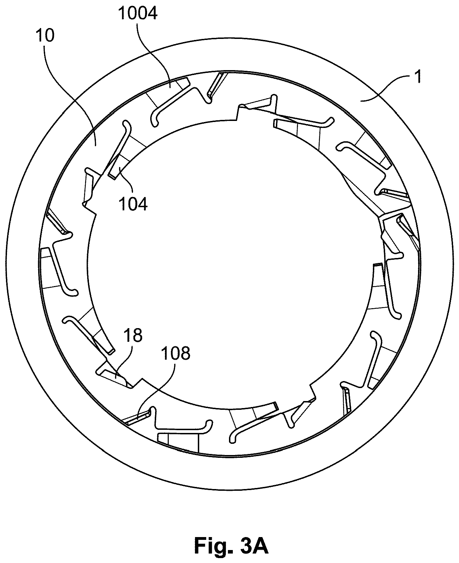

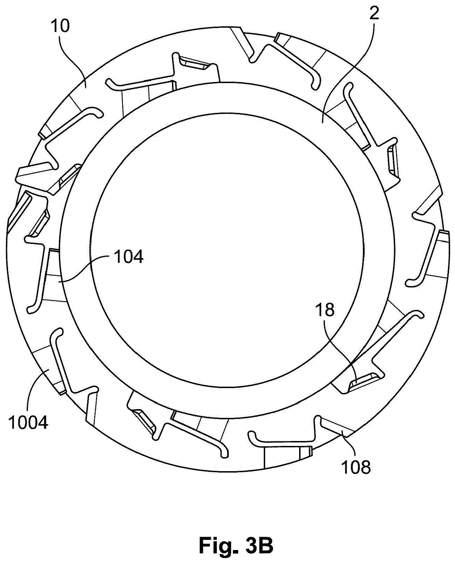

Figures 3A and 3B show an application example of contact ring 10. Contact ring 10 is arranged between two contact elements 1 and 2 such that it touches the oppositely disposed surfaces of contact elements 1 and 2 with the projections 14 and 1004 as well as with the blades 18 and 108. If contact elements 1 and 2 are pressed against one another, then the tips or the sharp edges of projections 14 and 1004 as well as the blades 18 and 108 penetrate electrically insulating surface layers such as a layer of aluminum oxide which naturally forms on the surface of a contact element made of electrically conductive aluminum.

An electrically conductive connection can thus be established with the aid of contact ring 10 between the electrically conductive core of first contact element 1 and the electrically conductive core of second contact element 2, even if contact elements 1 and 2 comprise insulating surfaces that electrically separate them from one another. A large number of projections 104 and 1004 as well as blades 18 and 108 on both sides of contact ring 10 has a physically positive effect on the electrothermal properties of the connection between the two contact elements 1 and 2.

The structure of contact ring 10 with its pointed projections 104 and 1004 as well as blades 18 and 108 for touching contact elements 1 and 2 also minimizes the area of the contact sections in which a protective surface of contact elements 1 and 2 is damaged. Corrosion of contact elements 1 and 2 can thereby be counteracted.

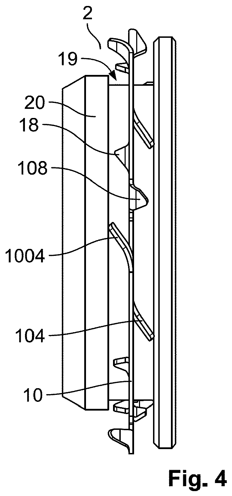

Figure 4 shows a possible embodiment of the contact element 2 with a journal 20, which has a groove 19. The contact ring 10 is expandable in the radial direction through the slot 17 and can therefore be inserted into and held in the groove 19 on the journal 20 without the need for a special joining process. This would not be possible with a closed annular structure.

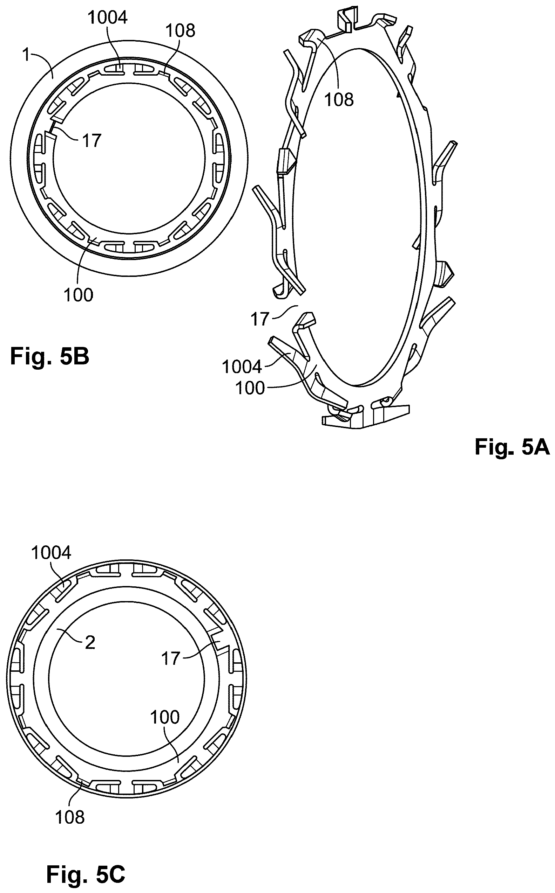

Figures 5A to 5C show the contact ring according to a second embodiment of the present invention separately and together with contact elements 1 and 2, respectively. Like the contact ring 10 of the first embodiment, the contact ring 100 comprises a flat ring-shaped structure made of electrically conductive material with a slot 17. The contact ring 100 has projections 1004 on the outwardly facing side. The projections 1004 are bent out of the ring plane, taper, and have tips or sharp edges that penetrate the electrically insulating surface layers of the contact elements 1 and 2, thereby forming an electrically conductive connection between the electrically conductive cores of the contact elements 1 and 2. Depending on the constellation of the opposing surfaces of the contact elements 1 and 2, the projections 1004 may be oriented radially (as in Figure 1C) or tangentially (as in Figures 5A to 5C). A tangential orientation of the projections 1004 allows for a more efficient structure and is therefore preferred.

In addition, the contact ring 100 includes blades 108 on the outwardly facing side which are bent out of the plane of the ring, have tips or sharp edges, and thus penetrate the opposing surfaces of the contact elements 1 and 2. The blades 108 are preferably, but not necessarily uniformly disposed between the projections 1004. As a result, the blades enable a tight interference fit of the contact ring 100 and the contact elements 1 and 2 in the final arrangement state. Compared to the projections 1004, the blades 108 are disposed at a greater angle relative to the plane of the ring and are therefore less deformed. The blades 108 stiffen the contact ring 100 in the longitudinal direction, so that the projections 1004 are therefore relieved of vibration and the contact ring 100 has a higher vibration resistance overall. In addition, the blades 108 reduce contact resistance by providing more contact areas with higher contact normal forces.

The contact ring 100 according to the second embodiment differs from the contact ring 10 according to the first embodiment in that it only has protrusions 1004 and blades 108 on the outside and not on the inside. Depending on the constellation of the opposing surfaces of the contact elements 1 and 2, this arrangement may be reversed.

Like contact ring 10 according to the first embodiment, the material of contact ring 100 according to the second embodiment preferably comprises a silver-plated copper alloy and which has good mechanical as well as good electrothermal properties. The design of contact ring 100 permits simple and inexpensive manufacture by stamping and bending, as well as very favorable assembly.

### List of reference characters

- 1, 2: contact element
- 3: contact ring in a known embodiment
- 4: contact ring with projections
- 10, 100: contact ring
- 14, 104, 1004: projection, inner projection, outer projection
- 15: flat segment
- 16: closure
- 17: slot
- 18, 108: inner blade, outer blade
- 19: groove
- 20: journal

## Claims

1. Contact ring (10, 100) for connecting at least a first and a second electrically conductive contact element (1, 2), the contact ring (10, 100) comprising:
a circular ring structure or a structure that is topologically equivalent thereto comprising electrically conductive material,
wherein said structure comprises a plurality of projections (104, 1004) on at least one side,
wherein said structure comprises a plurality of blades (18, 108) on at least one side,
wherein said projections (104, 1004) and said blades (18, 108) are configured such that they contact the electrically conductive materials of said contact elements (1, 2) and establish an electrically conductive connection therebetween,
wherein said projections (104, 1004) and said blades (18, 108) penetrate electrically insulating surface layers of said contact elements.

2. Contact ring (10, 100) according to claim 1, wherein the circular ring structure or the structure that is topologically equivalent thereto is arranged in a flat manner.

3. Contact ring (10, 100) according to claim 1 or 2, wherein the circular ring structure or the structure that is topologically equivalent thereto comprises a slot in radial direction.

4. Contact ring (10, 100) according to one of the preceding claims, wherein each projection (104, 1004) comprises tapering end sections which can be connected to contact elements (1, 2).

5. Contact ring (10, 100,) according to one of the preceding claims, wherein at least one of said projections (104, 1004) is bent in order to form a spring contact.

6. Contact ring (10, 100) according to one of the preceding claims, wherein each blade (18, 108) has tapered end portions connectable to contact elements (1, 2).

7. Contact ring (10, 100) according to any one of the preceding claims, wherein at least a portion of the blades (18, 108) is bent to form a contact.

8. Contact ring (10, 100) according to one of the preceding claims, wherein the material of said contact ring (10, 100) comprises a silver-plated copper alloy.

9. Contact ring (10) according to one of the preceding claims, wherein the projections (104) on the inner side and the projections (1004) on the outer side are bent out of the ring plane in opposite directions.

10. Contact ring (10) according to any one of the preceding claims, wherein the blades (18) on the inner side and the blades (108) on the outer side are bent out of the ring plane in opposite directions.

11. Contact ring (10) according to any one of the preceding claims, wherein the contact ring has five projections (104, 1004) and six blades (18, 108) per side.

12. Contact ring (100) according to any one of claims 1 to 8, wherein only one side, outer or inner side, of the contact ring (100) has projections (104, 1004) and blades (18, 108).

13. Contact ring (100) according to claim 12, wherein the contact ring has a slot in radial direction, the edges of which form blades which are bent out of the ring plane in opposite directions.

14. Contact ring (100) according to claim 13, wherein the contact ring has 16 projections (104, 1004) and nine blades (18, 108) on the outer side or the inner side, but not on both sides.

15. Contact ring (10, 100) according to one of the preceding claims, wherein the contact ring (10, 100) is integrated into one of the contact elements.
